Europäisches Patentamt

European Patent Office

Office européen des brevets

(11) Veröffentlichungsnummer: **0 130 289**
**A1**

# EUROPÄISCHE PATENTANMELDUNG

(21) Anmeldenummer: **84103883.9**

(22) Anmeldetag: **07.04.84**

(51) Int. Cl.⁴: **G 01 C 21/22**, G 09 B 29/10

(30) Priorität: **27.05.83 DE 3319208**

(43) Veröffentlichungstag der Anmeldung: **09.01.85**
**Patentblatt 85/2**

(84) Benannte Vertragsstaaten: **DE FR GB IT**

(71) Anmelder: **VDO Adolf Schindling AG, Gräfstrasse 103,
D-6000 Frankfurt/Main (DE)**

(72) Erfinder: **Angermüller, Helmut, Dr., Raimundstrasse 100,
D-6000 Frankfurt/Main (DE)**
Erfinder: **Presse, Joachim, Niddagaustrasse 13,
D-6000 Frankfurt/M. 90 (DE)**

(74) Vertreter: **Könekamp, Herbert, Dipl.-Ing. et al, Sodener
Strasse 9, D-6231 Schwalbach (DE)**

(54) **Navigationseinrichtung.**

(57) Die Anmeldung betrifft eine Navigationseinrichtung für Fahrzeuge, über die ein bestimmtes Fahrziel (X1–X47) mit seinen relativen Zielkoordinaten gegenüber dem Ausgangsort (X0) des Fahrzeugs eingebbar und zur Bildung eines Zielvektors auswertbar ist. Weiterhin ist eine Ausgabeeinrichtung vorhanden, durch die der momentan jeweils gültige Zielvektor nach Betrag und Richtung anzeigbar ist. Einer Speichereinheit sind die auf einen Ausgangsort (X0) bezogenen relativen Zielkoordinaten einer Mehrzahl von Fahrzielen (X1–X47) eingebbar, wobei jedem Fahrziel (X1–X47) eine Kennung zuordenbar ist. Durch Abruf einer Kennung ist der Zielvektor anzeigbar, der zu dem der Kennung zugeordneten Fahrziel (X1–X47) weist.

VDO Adolf Schindling AG          Gräfstraße 103
                                 6000 Frankfurt/Main
                                 G-R Kl-kl / 1714
                                 24. Mai 1983

### Navigationseinrichtung

Die Erfindung betrifft eine Navigationseinrichtung für Fahrzeuge, insbesondere für Straßenfahrzeuge, mit einer Eingabeeinheit, über die ein bestimmtes Fahrziel mit seinen relativen Zielkoordinaten gegenüber dem Ausgangsort des Fahrzeugs eingebbar und zur Bildung eines Zielvektors auswertbar ist, und mit einer Ausgabeeinrichtung, durch die der momentan jeweils gültige Zielvektor nach Betrag und Richtung anzeigbar ist.

Eine derartige, bekannte Navigationseinrichtung besitzt als Eingabeeinheit ein Tastenfeld, welches u.a. Tasten für die X- und die Y-Koordinate sowie für die Ziffern 0 bis 9 aufweist. Die Ausgabeeinheit besteht aus einem Rundinstrument mit einem Zeiger zur Anzeige der Richtung und einer Digitalanzeige zur Anzeige des Betrages des Zielvektors.

Diese Navigationseinrichtung ist immer nur für ein einziges Ziel benutzbar. Soll ein weiteres Ziel entweder nach Erreichen des ersten Ziels oder an irgendeiner Stelle zwischen Ausgangsort und erstem Ziel angesteuert werden, so müssen erst die neuen Koordinaten ausgehend von dem momentanen Standort ermittelt und in die Navigationseinrichtung eingegeben werden. Dies ist insbesondere bei einer Fahrt innerhalb eines Stadtgebietes und da besonders innerhalb eines dem Fahrer fremden Stadtgebietes nur mit großen Schwierigkeiten und der Gefahr von Fehleingaben möglich.

Aufgabe der Erfindung ist daher, eine Navigationseinrichtung nach dem Oberbegriff zu schaffen, die einfach und schnell auf ein gewünschtes Fahrziel einstellbar ist.

Diese Aufgabe wird erfindungsgemäß dadurch gelöst, daß einer Speichereinheit die auf einen Ausgangsort bezogenen relativen Zielkoordinaten einer Mehrzahl von Fahrzielen eingebbar sind, wobei jedem Fahrziel eine Kennung zugeordnet ist und durch Abruf einer Kennung der Zielvektor anzeigbar ist, der zu dem der Kennung zugeordneten Fahrziel weist. Diese Ausbildung ermöglicht es, die Zielkoordinaten sowohl eines einzigen als auch mehrerer Fahrziele, die angefahren werden sollen, vor Antritt der Fahrt in Ruhe zu ermitteln und der Speichereinheit einzugeben. Die Genauigkeit der Koordinatenermittlung, z.B. mittels eines Lineals auf einer Landkarte und damit auch die Genauigkeit mit der das Fahrziel erreicht werden kann, wird somit wesentlich erhöht. Dies gilt nicht nur für ein anzusteuerndes Ziel, sondern auch für mehrere Ziele.

Ohne wesentliche Ablenkung vom Verkehrsgeschehen kann entweder am Ausgangsort oder an einem der Fahrziele die Kennung des nächsten Fahrziels abgerufen werden, womit schon der Zielvektor zu dem neuen Fahrziel weist.

Ist darüber hinaus der Zielvektor ausgehend von den Momentankoordinaten jedem beliebigen gespeicherten Fahrziel zuordenbar, so kann während einer Fahrt mit eingeschalteter Navigationseinrichtung zu jeder Zeit und an jedem Ort das anzusteuernde Fahrziel nur durch Abruf einer anderen Kennung gewechselt werden. Dies kann problemlos auch ohne anzuhalten während der Fahrt geschehen, wodurch die Verkehrssicherheit besonders hoch gegeben ist.

Um darüber informiert zu sein, auf welches Fahrziel sich der angezeigte Zielvektor bezieht, kann der momentan angezeigte Zielvektor der an einer Zielanzeige angezeigten Kennung zugeordnet sein.

Eine einfache Handhabung der Zuordnung der Kennung zu einem bestimmten Fahrziel wird damit erreicht, daß die bei Eingabe der Zielkoordinaten eines bestimmten Fahrziels angezeigte Kennung dem Fahrziel zugeordnet ist.

Möchte man Fahrziele speichern, die in verschiedenen, weiter voneinanderliegenden Bereichen, wie z.B. in verschiedenen Städten liegen, so würde sich der bei derartigen Navigationseinrichtungen immer vorhandene Ungenauigkeitsfehler durch die relativ lange Zufahrt zu einem solchen Bereich dahingehend auswirken, daß die Abweichung von dem anzusteuernden Fahrziel relativ groß wäre. Dies kann dadurch vermieden werden, daß die auf einen Ausgangsort bezogenen Fahrziele einen Zielbereich bilden und der Speichereinheit eine Mehrzahl auf unterschiedliche Ausgangsorte bezogene Zielbereiche eingebbar sind, wobei jedem Zielbereich eine Bereichskennung zuordenbar ist. Damit ist es z.B. möglich, sich auf einer Autobahn einer Stadt zu nähern, wobei die Fahrt auf der Autobahn keine besondere Navigationshilfe erfordert. Als Ausgangsort für den durch die Stadt gebildeten Zielbereich kann z.B. eine bestimmte Autobahnabfahrt zu der Stadt dienen. Bei Erreichen dieser Autobahnabfahrt schaltet man die Navigationseinrichtung ein und wird nun durch den Zielvektor zu jedem gewünschten vorher eingegebenen Fahrziel nur durch Abruf der Bereichskennung und der Zielkennung geführt.

In gleicher Weise wie die Zielkennung kann der momentan angezeigte Zielvektor einem Fahrziel des an einer Bereichsanzeige angezeigten Zielbereichs zugeordnet sein.

Der einfachen problemlosen Zuordnung eines Zielbereichs zu einer Bereichskennung dient es, wenn die bei Eingabe der Zielkoordinaten eines bestimmten Fahrziels angezeigte Bereichskennung dem Zielbereich des Fahrziels zugeordnet ist.

In einfacher Weise kann die Zielanzeige und/oder die Bereichsanzeige eine Digitalanzeige sein, die vorzugsweise eine alphanumerische Digitalanzeige ist. Es versteht sich, daß die Zielanzeige und/oder die Bereichsanzeige auch als geschriebenes und/oder gesprochenes Wort ausgebildet sein kann.

Um ohne viele Bedienungseinheiten und Anzeigeeinheiten die gewünschte Zielanzeige und die gewünschte Bereichsanzeige einstellen zu können, kann die Digitalanzeige im Scroll-Modusverfahren ansteuerbar sein. Dazu kann die Digitalanzeige durch eine Zieltaste, vorzugsweise eine Wipptaste zum positiven und negativen Ansteuern der Eingabeeinheit ansteuerbar sein.

Zur Vermeidung einer Vielzahl von Anzeigen und zur besseren Überschaubarkeit dient es, wenn die Digitalanzeige mehrstellig ist, wobei die erste Stelle die Bereichsanzeige und die folgende Stelle die Zielanzeige bildet.

Sind die Momentankoordinaten durch die Zielkoordinaten des momentanen Fahrziels ersetzbar, so kann nach Erreichen eines angesteuerten Fahrziels ein möglicherweise vorhandener Navigationsfehler eliminiert werden. Die Ansteuerung des nächsten Fahrziels erfolgt damit wieder von richtigen Startdaten ausgehend.

Wenn die Momentankoordinaten als Fahrziel des momentan angesteuerten Zielbereichs eingebbar sind, kann jede beliebige Stelle auf der Navigationsfahrt als neues Fahrziel gespeichert und wie auch alle anderen Fahrziele problemlos zu einem späteren Zeitpunkt wieder angefahren werden.

Von besonderem Vorteil ist es bei dem Gegenstand der Erfindung, daß die Speichereinheit eine auswechselbare Einheit sein kann. Damit ist die Möglichkeit gegeben, daß z.B. für eine bestimmte Stadt in Speichereinheiten allgemein bedeutende Ziele der Stadt wie z.B. Baudenkmäler und Sehenswürdigkeiten eingelesen werden. Solche vorprogrammierte Speichereinheiten sind dann ähnlich wie Stadtpläne als fertige Orientierungshilfen verkaufbar.

Ein Ausführungsbeispiel der Erfindung ist in der Zeichnung dargestellt und wird im folgenden näher beschrieben. Es zeigen

Figur 1  eine Eingabeeinheit

Figur 2  eine Ausgabeeinrichtung

Figur 3  eine Zielverteilung

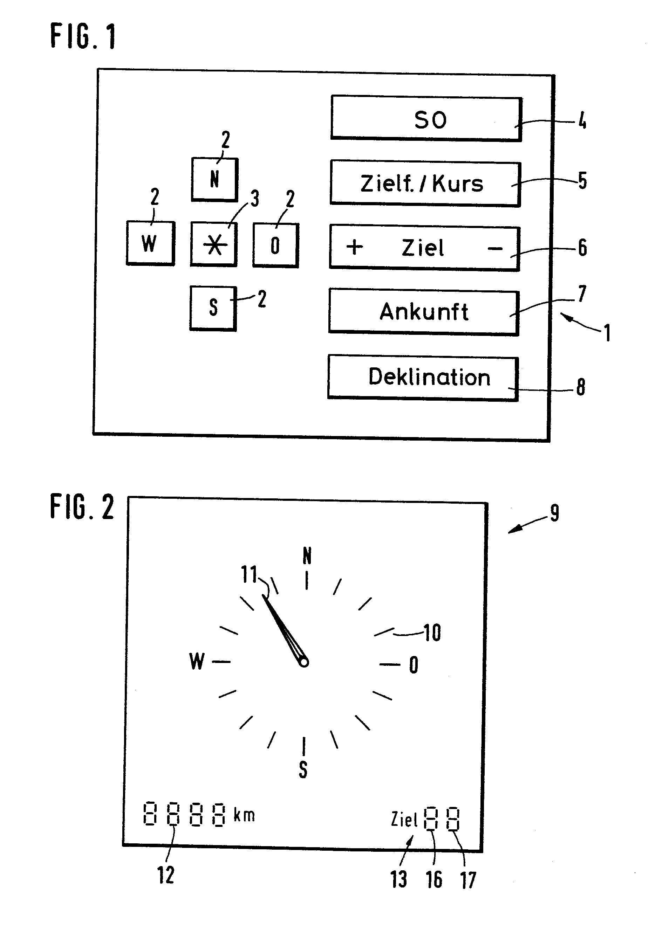

Die in Figur 1 dargestellte Eingabeeinheit 1 besitzt
vier windrosenartig angeordnete Richtungstasten 2, in
deren Mitte eine Beschleunigungstaste 3 angeordnet ist.
Neben den Richtungstasten 2 sind untereinander eine
Standorttaste 4, eine Umschalttaste 5, eine Zielwähltaste 6, eine Korrekturtaste 7 und eine Deklinationstaste 8 angeordnet.

Figur 2 zeigt eine Ausgabeeinrichtung 9 mit einer windrosenartigen Richtungsanzeige 10, die einen Zeiger 11
besitzt.

Eine Digitalanzeige 12 dient zur Anzeige der Luftlinienentfernung zum Fahrziel, während eine Zielanzeige 13
zur Anzeige des Zielbereichs sowie des Fahrziels dient.

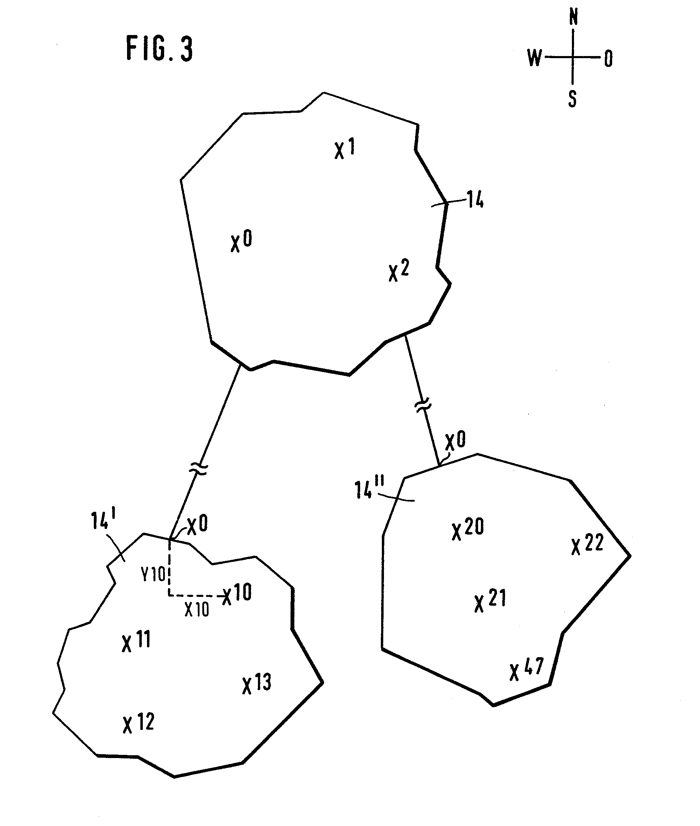

In Figur 3 sind drei verschiedene Zielbereiche 14, 14',
14" dargestellt, die jeweils eine Mehrzahl an Fahrzielen
X1, X2, X10 - X13, X20 - X22 und X47 aufweisen. Diese
Zielbereiche 14, 14', 14" können Städte sein, die durch
Autobahnen miteinander verbunden sind.

Durch die Richtungstasten 2 sind die Zielkoordinaten für
jeden Zielbereich 14, 14', 14" jeweils ausgehend von
einem Ausgangspunkt X0 in eine nicht dargestellte Speichereinheit eingebbar.

Um dabei sowohl den Zielbereichen als auch den Fahrzielen eine Kennung zuweisen zu können, wird die erste Ziffer 16 der Zielanzeige 13 einem Zielbereich und die zweite Ziffer 17 einem Fahrziel zugeordnet. Dies ist im vorliegenden Fall für den Zielbereich 14 eine 0, für 14' eine 1 und für 14" eine 2.

Die Ziffern 17 für die Fahrziele sind dann irgendwelche Ziffern zwischen 0 und 9.

In einer nicht dargestellten Konkordanzliste können dann die durch die Ziffern 16 und 17 bezeichneten Fahrziele in Worten näher beschrieben sein.

Um z.B. das Fahrziel X10 in die Speichereinheit einzulesen, wird zuerst die Kennung für den Zielbereich 14' und für das Fahrziel X10 festgelegt. Dies ist für den Zielbereich die "1" und für das Fahrziel die "0". Durch gleichzeitiges Drücken der Plus- und Minusseite der Zielwähltaste 6 beginnt die Ziffer 16 von 0 bis 9 im Scroll-Modusverfahren hochzulaufen. Erscheint dabei die "1" bleibt diese durch Loslassen der Zielwähltaste 6 stehen.

Durch Drücken nur der Plus- oder der Minusseite der Zielwähltaste 6 erfolgt ebenfalls im Scroll-Modusverfahren ein Hoch- bzw. Zurücklaufen der Ziffer 17. Bei Erscheinen der "0" wird diese durch Loslassen der Zielwähltaste 6 festgelegt.

Nun werden bezogen auf den Ausgangsort X0 die Zielkoordinaten eingelesen. Dazu wird die Richtungstaste Süd solange gedrückt bis die im Scroll-Modusverfahren laufende Digitalanzeige 12 den Betrag der Koordinate X10 anzeigt.

Dabei zeigt auch der Zeiger 11 auf Süd. Anschließend wird die Richtungstaste Ost gedrückt, bis auf die gleiche Weise der Betrag der Koordinate X10 erscheint. Auch hier zeigt der Zeiger 11 auf Ost.

Durch Betätigung der Deklinationstaste 8 kann ebenfalls im Scroll-Modusverfahren der Deklinationswinkel über die Digitalanzeige 12 betragmäßig und über den Zeiger 11 richtungsmäßig eingestellt werden.

Nunmehr sind die Zielkoordinaten des Fahrziels X10 in der Speichereinheit gespeichert. Auf die gleiche Weise werden auch alle anderen Fahrziele in die Speichereinheit eingelesen.

Soll bei dem Einlesen im Scroll-Modusverfahren die Ablaufgeschwindigkeit erhöht werden, muß nur zusätzlich die Beschleunigungstaste 3 gedrückt werden.

Um die Navigationseinrichtung nun benutzen zu können, brauchen am Ausgangspunkt X0 immer nur die Ziffern 16 und 17 der Zielanzeige 13 auf die den gewünschten Zielbereich und Fahrziel entsprechende Ziffer eingestellt zu werden, was in bekannter Weise durch die Zielwähltaste 6 erfolgt. Damit erscheint automatisch an der Digitalanzeige der Betrag der Luftlinienentfernung und durch den Zeiger 11 die einzuschlagende Richtung,unabhängig von der Himmelsrichtung zum gewünschten Fahrziel.

Soll festgestellt werden, in welche Himmelsrichtung sich das Fahrzeug momentan bewegt, zeigt dies der Zeiger 11 nach Drücken der Umschalttaste 5 an. Ein zweites Drücken der Umschalttaste 5 schaltet den Zeiger 11 wieder in die

- 9 -

zum Fahrziel gerichtete Richtung zurück.

Hat man ein Fahrziel erreicht ohne daß die Digitalanzeige "0" anzeigt, können die Momentankoordinaten durch Drücken der Korrekturtaste 7 durch die Zielkoordinaten des momentanen Fahrziels ersetzt werden.

Will man an irgendeiner Stelle eines Zielbereichs während einer Navigationsfahrt den momentanen Standort als weiteres Fahrziel speichern, so muß man eine noch unbenutzte Kennung, z.B. "47", für ein weiteres Fahrziel z.B. "X47" an der Zielanzeige 13 einstellen und die Standorttaste 4 drücken. Damit ist auch dieses Fahrziel gespeichert und kann immer wieder angefahren werden.

0130289

VDO Adolf Schindling AG          Gräfstraße 103
                                 6000 Frankfurt/Main
                                 G-R Kl-kl / 1714
                                 24. Mai 1983


## Patentansprüche

1.  Navigationseinrichtung für Fahrzeuge, insbesondere für Straßenfahrzeuge, mit einer Eingabeeinheit, über die ein bestimmtes Fahrziel mit seinen relativen Zielkoordinaten gegenüber dem Ausgangsort des Fahrzeugs eingebbar und zur Bildung eines Zielvektors auswertbar ist, und mit einer Ausgabeeinrichtung, durch die der momentan jeweils gültige Zielvektor nach Betrag und Richtung anzeigbar ist, dadurch gekennzeichnet, daß einer Speichereinheit, die auf einen Ausgangsort (X0) bezogenen relativen Zielkoordinaten einer Mehrzahl von Fahrzielen (X1 - X47) eingebbar sind, wobei jedem Fahrziel (X1 - X47) eine Kennung zuordenbar ist und durch Abruf einer Kennung der Zielvektor anzeigbar ist, der zu dem der Kennung zugeordneten Fahrziel (X1 - X47) weist.

2.  Navigationseinrichtung nach Anspruch 1, dadurch gekennzeichnet, daß der Zielvektor ausgehend von den Momentankoordinaten jedem beliebigen gespeicherten Fahrziel (X1 - X47) zuordenbar ist.

3.  Navigationseinrichtung nach einem der vorhergehenden Ansprüche, dadurch gekennzeichnet, daß der momentan angezeigte Zielvektor der an einer Zielanzeige (13) angezeigten Kennung zugeordnet ist.

4.  Navigationseinrichtung nach einem der vorhergehenden Ansprüche, dadurch gekennzeichnet, daß die bei Eingabe der Zielkoordinaten eines bestimmten Fahrziels (X1- X47) angezeigte Kennung dem Fahrziel (X1 - X47) zugeordnet ist.

5.  Navigationseinrichtung nach einem der vorhergehenden Ansprüche, dadurch gekennzeichnet, daß die auf einen Ausgangsort (XO) bezogenen Fahrziele (X1 - X47) einen Zielbereich (14, 14', 14") bilden und der Speichereinheit eine Mehrzahl auf unterschiedliche Ausgangsorte (XO) bezogene Zielbereiche (14, 14', 14") eingebbar sind, wobei jedem Zielbereich eine Bereichskennung zuordenbar ist.

6.  Navigationseinrichtung nach Anspruch 5, dadurch gekennzeichnet, daß der momentan angezeigte Zielvektor einem Fahrziel (X1 - X47) des an einer Bereichsanzeige angezeigten Zielbereichs (14, 14', 14") zugeordnet ist.

7.  Navigationseinrichtung nach Anspruch 5, dadurch gekennzeichnet, daß die bei Eingabe der Zielkoordinaten eines bestimmten Fahrziels (X1 - X47) angezeigte Bereichskennung dem Zielbereich (14, 14', 14") des Fahrziels (X1 - X47) zugeordnet ist.

8. Navigationseinrichtung nach einem der vorhergehenden Ansprüche, dadurch gekennzeichnet, daß die Zielanzeige (13) und/oder die Bereichsanzeige eine Digitalanzeige ist.

9. Navigationseinrichtung nach einem der vorhergehenden Ansprüche, dadurch gekennzeichnet, daß die Zielanzeige (13) und/oder die Bereichsanzeige eine alphanumerische Digitalanzeige ist.

10. Navigationseinrichtung nach Anspruch 9, dadurch gekennzeichnet, daß die Digitalanzeige im Scroll-Modusverfahren ansteuerbar ist.

11. Navigationseinrichtung nach Anspruch 10, dadurch gekennzeichnet, daß die Digitalanzeige durch eine Zieltaste (6) der Eingabeeinheit (1) ansteuerbar ist.

12. Navigationseinrichtung nach Anspruch 9, dadurch gekennzeichnet, daß die Digitalanzeige mehrstellig ist, wobei die erste Stelle die Bereichsanzeige und die folgende Stelle die Zielanzeige bildet.

13. Navigationseinrichtung nach einem der vorhergehenden Ansprüche, dadurch gekennzeichnet, daß die Momentankoordinaten durch die Zielkoordinaten des momentanen Fahrziels ersetzbar sind.

14. Navigationseinrichtung nach einem der vorhergehenden Ansprüche, dadurch gekennzeichnet, daß die Momentankoordinaten als Fahrziel (X47) des momentan angesteuerten Zielbereichs (14") eingebbar sind.

## FIG. 1

| | SO | 4 |

N — 2

W — 2    ✻ — 3    0 — 2

| | Zielf./Kurs | 5 |

| + | Ziel | − | 6 |

S — 2

| | Ankunft | 7 |

1

| | Deklination | 8 |

## FIG. 2

9

N

11    10

W —    — 0

S

8 8 8 8 km

Ziel 8 8

12    13  16  17

FIG.3

Europäisches
Patentamt

**EUROPÄISCHER RECHERCHENBERICHT** 0130289

EP 84 10 3883

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | EP-A-0 027 232 (SIEMENS AG) <br><br> * Figur 2; Patentansprüche 1-3 * <br><br> --- | 1,8,9, 12 | G 01 C 21/22 <br> G 09 B 29/10 |
| Y | DE-A-3 006 141 (M. RENNINGS) <br><br> * Figur 5; Patentansprüche * <br><br> --- | 1,8,9, 12 | |
| A | FR-A-2 448 202 (P.J.P. FLEISCHMANN et al.) <br><br> --- | | |
| A | DE-A-2 910 386 (TELDIX GMBH) <br><br> ----- | | |

| | RECHERCHIERTE SACHGEBIETE (Int. Cl. 3) |
|---|---|
| | G 05 D 1/00 <br> G 09 B 29/00 <br> G 01 C 21/00 |

Der vorliegende Recherchenbericht wurde für alle Patentansprüche erstellt.

| Recherchenort | Abschlußdatum der Recherche | Prüfer |
|---|---|---|
| BERLIN | 21-08-1984 | BEYER F |